# EUROPEAN PATENT APPLICATION

(11) **EP 1 739 618 A1**
(43) Date of publication of application: **03.01.2007**
(21) Application number: 05106018.4
(22) Date of filing: 01.07.2005
(51) Int. Cl.: G06T 1/00

(54) **Inserting a watermark during reproduction of multimedia data**

(71) Applicant: Fraunhofer-Gesellschaft zur Förderung der angewandten Forschung e.V., 80686 München (DE)
(72) Inventor: Steinebach, Martin, 64859 Eppertshausen (DE); Zmudzinski, Sascha, 60316 Frankfurt (DE)
(74) Representative: Hilleringmann, Jochen

(57) **Abstract**

The method for providing a media data presentation e. g. a video and/or audio presentation, with a watermark comprises the steps of identifying the location and/or time where and/or at which the presentation of the media data take place, generating a watermark code representing the location and/or time of the presentation of the media data, embedding the watermark code into the media data to be presented.

## Description

### BACKGROUND

### Field of the Invention

The present invention relates to creating localized copies by embedding satellite position signals and, in particular, to a method for providing a media data presentation with a watermark.

Illegal copies of movies recorded in cinemas with hand cameras and distributed via the internet as downloads have become a serious thread to the movie industry. In some cases, only the sound track of the movie is of interest for the (illegal) downloaders. This is the case when a foreign language copy is already available in the Internet, In this case the copy can be dabbed with a native language sound track.

To establish countermeasures against piracy, it is of great importance to know where the illegal copies have been recorded. It would be very helpful to identify the cinema where an illegal copy comes from to increase controls for recording devices taken into the cinema.

### State of the Art, drawbacks

Today movies are protected during the production process, usually using an analogue encoding of high sound frequencies. This is the only known approach to individualization of movie copies distributed to cinemas. For individual copies used in movie promotion or contests, digital watermarking is already applied, but here only small numbers are marked and the marking is done before distribution. This leads to a serious overhead with respect to tracking the marked copies, as they must not be mixed up or sent to the wrong destination.

So the two major drawbacks are:
- Risk of confusion of copies while distributing individual copies
- Overhead in the production process
   Digital watermarking techniques based on steganographic systems embed information directly into the media data. As an alternative or supporting technology to cryptographic mechanisms, watermarking represents an efficient technology to ensure both data integrity and data origin authenticity. Copyright, customer or integrity information can be embedded, using a secret key, into the media data as transparent patterns. Based on the application areas for digital watermarking known today, the following five watermarking classes are defined: authentication watermarks, fingerprint watermarks, copy control watermarks, annotation watermarks, and integrity watermarks, The most important properties of digital watermarking techniques are robustness, security, imperceptibility (also called transparency), complexity and capacity.
- **Robustness** describes whether the watermark can be reliably detected after media operations. It is important to note that robustness does not include attacks on the embedding schemes that are based on the knowledge of the embedding algorithm or on the availability of the detector function. Robustness means resistance to "blind", non-targeted modifications, or common media operations.
- **Security** describes whether the embedded watermarking information cannot be removed beyond reliable detection by targeted attacks based on full knowledge of the embedding and detection algorithm and possession of at least one watermarked data. Only the applied secret key remains unknown to the attacker. The concept of security includes procedural attacks or attacks based on a partial knowledge of the carrier modifications due to message embedding. The security aspect also includes the false positive detection rates.
- **Transparency** relates to the properties of the human sensory system. A transparent watermark causes no perceptible artefacts or quality loss.
- **Complexity** describes the effort and time we need to embed and retrieve a watermark. This parameter is essential for real time applications. Another aspect addresses whether the original data is required in the retrieval process or not. We distinguish between non-blind and blind watermarking schemes, the later require no original copy for detection.
- **Capacity** describes how many information bits can be embedded into the cover data. It also addresses the possibility of embedding multiple watermarks in one document in parallel.

The optimization of the parameters is mutually competitive and cannot be clearly done at the same time. If we want to embed a large message, we cannot require strong robustness simultaneously. A reasonable compromise is always a necessity. On the other hand, if robustness to strong distortions is an issue, the message that can be reliably hidden must not be too long.

### SUMMARY OF THE INVENTION

The present invention provides for a method for providing a media data presentation e.g. a video and/or audio presentation with a watermark, comprising the steps of
- identifying the location and/or time where and/or at which the presentation of the media data take place,
- generating a watermark code representing the location and/or time of the presentation of the media data,
- embedding the watermark code into the media data to be presented

In one embodiment the step of identifying location and/or time of presentation of the media data comprises use of a satellite based positioning system.

In another embodiment the media data comprises at least one of video and audio data.

The risk of mistakes in the distribution of copies is solved by setting the individualization after the distribution. A common copy is sent to all parties. This copy is encrypted and can only be accessed with a system which individualizes the copies at the same time it decrypts it.

This also solves the overhead problem in the production stage. The only overhead caused in our solution is the encryption of the distributed common copy, which is done only once and is therefore minimal.

### Concept of solution

By way of the invention it is possible to identify the source of any copy taken from e, g. a soundtrack or other media data presented. Digital watermarking is a technology to embed additional information into media data like audio or video data. This information cannot be removed and survives media transformations like DA/AD conversation or lossy compression. A watermarking device can be included into the playback device for presenting the media data (i. e. video and audio data in a cinema). Every time the data is presented (played back) in a cinema, a watermark is embedded. The watermark can later be used to identify the copy, i. e. the location and/or time of its generation, if someone uses a recording of the soundtrack and/or film for illegal activities.

For a maximum of security and convenience, the embedded information should be (a) non-ambiguous and (b) independent from the chain of distribution:
(a) The information should always clearly identify location and if possible time of the recording. Only then the source of an illegal activity can be traced and counteractive measures can take place.
(b) The chain of distribution for movie soundtracks can be rather hard to control, as movie copies are moved from one cinema to the next. Therefore individualization should take place in dependence of the cinema or similar location.

The usage of satellite signals (e. g. GRS, GPS, Galileo, GLONASS) for identifying the copies (i. e. the location and, if possible, time of its generation) is preferred. A DCF radio signal (wireless time signal) can be used for acquiring time information. A receiver can retrieve position and/or time signal and provide it to the watermarking device. Time and location of the current playback is then embedded into the audio and/or video signal. In this way a sufficiently exact positioning can be achieved. If an illegal copy is found, the location and/or time of its generation is/are retrieved and the cinema belonging to this location is contacted.

In this way a very convenient method for creating individual copies is provided as broken devices for soundtrack playback can be exchanged without the need for setting up security information. Stolen playback devices would identify the place they are used and not point back to the cinema they were stolen from. Time signals would be hard to modify.

### Improvements

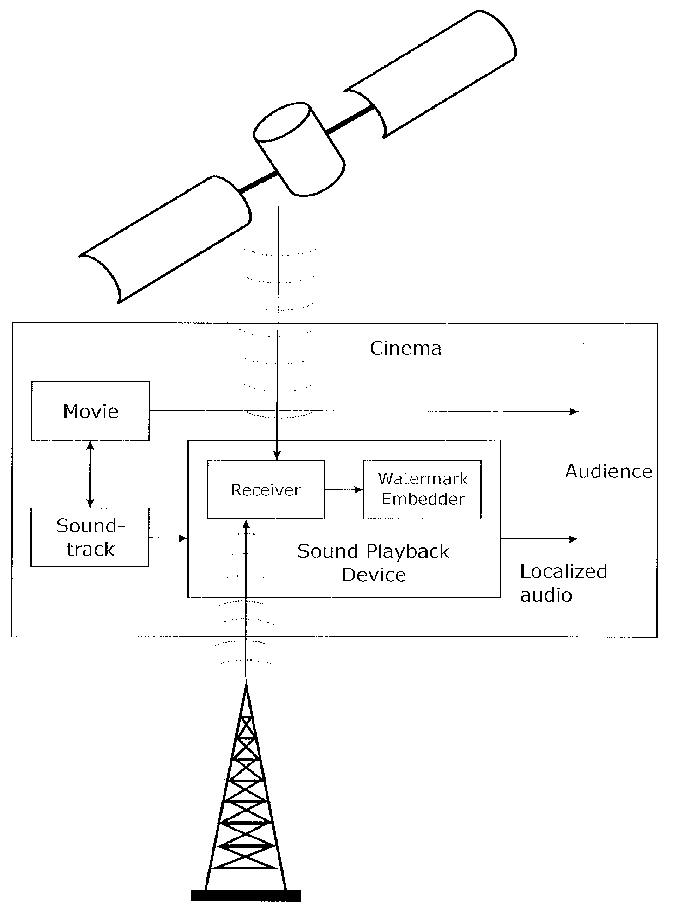

The improvements of the invention in comparison to known approaches are:
- More detailed individualization with location and time/date information based on a secure satellite signal
- No need of individualization overhead at movie duplication facilities as individual copies are created on the fly during playback in cinemas
- Embedding of state of the art watermarking robust against more attacks than analogue marks and present in the complete movie. The analogue marks are only present at different selected positions in the movie.
   The drawing illustrates the embedding of the individual watermark based on a satellite signal in a movie soundtrack.

## Claims

1. Method for providing a media data presentation e.g. a video and/or audio presentation with a watermark, comprising the steps of
- identifying the location and/or time where and/or at which the presentation of the media data take place,
- generating a watermark code representing the location and/or time of the presentation of the media data,
- embedding the watermark code into the media data to be presented.

2. Method according to claim 1, wherein the step of identifying location and/or time of presentation of the media data comprises use of a satellite based positioning system for acquiring location and/or time information.

3. Method according to claim 1 or 2, wherein the step of identifying time of presentation of the media data comprises use of a DCF radio signal for acquiring time information.

4. Method according to any one of claims 1 to 3, wherein the media data comprises at least one of video and audio data.

5. Method according to any one of claims 1 to 4, wherein the step of generating the watermark code comprises generating a digital watermark code.
